# EUROPEAN PATENT SPECIFICATION

(11) **EP 4 386 469 B1**
(45) Date of publication and mention of the grant of the patent: **10.09.2025**
(21) Application number: 23184019.0
(22) Date of filing: 07.07.2023
(51) Int. Cl.: G02C 5/14, G02C 5/22

(54) **MECHANICAL ELASTIC STRUCTURE GLASSES WITHOUT METAL SPRING CORES AND WITHOUT METAL SCREWS**
MECHANISCHE ELASTISCHE STRUKTURGLÄSER OHNE METALLISCHE FEDERKERNE UND OHNE METALLISCHE SCHRAUBEN
LUNETTES À STRUCTURE ÉLASTIQUE MÉCANIQUE SANS NOYAU DE RESSORT MÉTALLIQUE ET SANS VIS MÉTALLIQUES

(30) Priority: 16.12.2022 CN 202223378983 U; 26.04.2023 US 202318139920
(43) Date of publication of application: 19.06.2024
(73) Proprietor: Wenzhou Eyekeeper Technology Co., Ltd., Wenzhou, Zhejiang (CN)
(72) Inventor: FANG, Kai, WENZHOU CITY (CN)
(74) Representative: Plavsa, Olga

(56) References cited:
- WO-A1-97/21135
- CH-A- 474 770
- FR-A1- 2 208 130
- US-A- 4 974 289
- US-A1- 2014 132 912
- US-A1- 2017 227 787

## Description

### FIELD OF THE INVENTION

The present invention relates to the technical field of eyeglasses having an elastic structure, in particular to a mechanical elastic structure glasses without metal spring cores and without metal screws.

### BACKGROUND OF THE INVENTION

Eyeglasses - also referred to hereafter by the common term "glasses" - typically have two parts, lenses and frames, and are used to improve vision, protect the eyes, and/or for decorative purposes. Glasses can correct myopia, hyperopia, astigmatism, presbyopia, strabismus, amblyopia and many other vision problems.

Glasses are divided into near-sighted glasses, far-sighted glasses, presbyopic glasses, astigmatism glasses, plain glasses, computer goggles, swimming goggles, night vision goggles, gaming goggles, wind goggles, sunglasses, toy glasses, etc. There are also special glasses for viewing 3D stereoscopic images or virtual real images. Glasses provide a variety of protection for the eyes. Modern glasses usually have nose pads in the middle of the lens and soft cushions in the left and right arms where they rest on the ears. The entire structure of injection molded glasses is plastic, only the hinge joint of the frame and the temple is made of metal.

Currently, there are only two types of hinge structures for all injection molded glasses. One is composed of metal spring cores and metal screws. The metal spring cores and metal screws in this structure are essential components, but the screws have the disadvantage of falling off easily and the metal parts have the risk of causing skin allergy. The other is the structure consisting of only plastic teeth without screws. The structure with only plastic teeth and no screws has no metal parts and loses the elastic function of the spring cores.

Therefore, it is a problem in the art to design a kind of glasses that can avoid the problem of metal accessories causing skin allergy and also have the elastic function of spring cores.

The beneficial effect of the invention is that it does not contain metal springs or metal screws, that is, it does not contain any metal accessories, and the hinge elastic function is achieved through the injection molding process; it is safe and secure for consumers with metal allergic skin to wear.

US4974289A disclose a hinge which is made of two elements articulated to one another. One element constitutes at least one fork, supporting the hinge pin, and the other element constitutes at least one hub fitted on the hinge pin supported by the fork.

FR2208130A1 discloses an elastic spectacle hinge comprising a pivot and two legs.

CH474770A discloses a hinge with a pin of angular shape having a square section.

### SUMMARY OF THE INVENTION

From the foregoing, it is seen that it is a problem in the art to provide a device meeting the above requirements. According to the present invention, a device is provided which meets the aforementioned requirements and needs in the prior art.

The main purpose of this invention is to overcome the deficiencies in the prior art and provide a mechanical elastic structure glasses without metal spring movement and metal screws. The glasses can not only realize the elastic function of metal spring, but also avoid the risk that human skin will be allergic to metal accessories. At the same time, it also solves the problem that the metal screw is easy to fall off.

The present invention includes: a mechanical elastic structured glasses according to claim 1.

In order to realize the above objectives, the technical scheme adopted by the invention is a device without metal spring and metal screw, which is injected by plastic material and designed by structure, so as to realize the performance of glasses hinge with metal spring device. It is composed of two teeth on the frame, three teeth at the front end of the temple, and a square chamfered fixed rotating shaft through it.

The two teeth of each respective end of the frame fit the three teeth of each respective front end of the respective temple, and each respective fixed rotating shaft runs through the respective double teeth and respective three teeth. The double teeth of the frame fit with the three teeth of the front end of the temple, and the double teeth of the frame are arranged with a fixed hole in the vertical direction coinciding with the fixed rotating shaft, and the fixed hole is used to connect the fixed rotating shaft.

The three teeth of the front end of the temple fit with the double teeth of the frame. The three teeth of the front end of the temple are arranged with a rotation hole in the vertical direction consistent with the fixed rotating shaft, and the rotation hole is used to connect the fixed rotating shaft.

The three teeth of the temple include an upper tooth, a middle tooth, and a lower tooth.

The upper tooth and the lower tooth of the three teeth of the temple have respective openings (gaps) at one end of the rotation holes, and there are elastic structural holes at the other end of the rotation holes.

The opening of rotation holes of the upper and lower teeth at the front end of the temple and the elastic structure hole of rotation holes at the rear end of the temple are to realize the elastic function of the temple during the opening and closing process. The front end of the middle tooth of the three teeth of the temple is not open, and the entire circle surrounds the fixed rotating shaft, thereby enabling the stable connection of the frame and the temple under the fixed action of the fixed rotating shaft.

The two ends of the fixed rotating shaft are set to be square, and the four corners are set with chamfering corners, to ensure that the corresponding position of the fixed rotating shaft and the double teeth of the frame are precisely not loosened, and the middle part of the fixed rotating shaft is set to be cylindrical.

The middle tooth of the three teeth at the front end of the temple is set with a groove corresponding to the middle part of the fixed rotating shaft. The groove is cylindrical to ensure that the leg is smooth and not stuck during rotation.

Compared with the prior art, the beneficial effect of the invention is: the mechanical elastic structure glasses without metal spring movement and metal screws, that is, without any metal accessories, through the plastic mechanical structure to achieve the hinge elastic function. Consumers with metal allergic skin can be safely and safely worn. It can realize the existing metal spring elastic function, while avoiding the risk of metal accessories being allergic to human skin, and avoiding the problem of metal screw falling off. Moreover, the structure is simple and improves the production efficiency.

The following technical points are significant to the present invention are:
Square chamfered fixed rotating shaft design;
Special-shaped design of three teeth at the front end of the temple;
the front end of the middle tooth of the three teeth of the temple is closed without an opening;
The front end of the upper and lower teeth of the three teeth of the temple have openings; and
There are elastic structure designs at the rear end of the openings of the upper and lower teeth of the three teeth of the temple.

Other objects and advantages of the present invention will be more readily apparent from the following detailed description when read in conjunction with the accompanying drawings.

### BRIEF DESCRIPTION OF THE DRAWINGS

FIG. 1 is a front left perspective view from above of a Mechanical Elastic Structure Glasses, showing my new design;
FIG. 2 is a rear right perspective view from above of the Mechanical Elastic Structure Glasses of FIG. 1.
FIG. 3 is a rear right perspective view from below of the Mechanical Elastic Structure Glasses of FIG. 1.
FIG. 4 is a front elevational view of the Mechanical Elastic Structure Glasses of FIG. 1.
FIG. 5 is a rear elevational view of the Mechanical Elastic Structure Glasses of FIG. 1.
FIG. 6 is a left elevational view of the Mechanical Elastic Structure Glasses of FIG. 1, the right view being a mirror image of this view.
FIG. 7 is a top plan view of the Mechanical Elastic Structure Glasses of FIG. 1.
FIG. 8 is a bottom elevational view of the Mechanical Elastic Structure Glasses of FIG. 1.
FIG. 9A is a front left perspective view from above of the assembly of a pin forming part of a left hinge, in a region within a dashed outline; the right hinge being a mirror image thereof.
FIG. 9B is an enlarged view of the portion shown in dashed outline in FIG. 9A.
FIG. 10A is a rear right perspective view from above of the assembly of the pin forming part of the left hinge, in a region within a dashed outline.
FIG. 10B is an enlarged view of the portion shown in dashed outline in FIG. 10A.
FIG. 11A is a top plan view of the Mechanical Elastic Structure Glasses of FIG. 7, having a region shown in dashed outline.
FIG. 11B is an enlarged view of the portion shown in dashed outline in FIG. 11A.
FIG. 11C is an enlarged view of the portion shown in dashed outline in FIG. 11A, showing a second position of a temple member in dashed outline.
FIG. 11D is an enlarged view of the portion shown in dashed outline in FIG. 11A, showing a third position of a temple member in dashed outline.
FIG. 12A is an exploded view of the Glasses of FIG. 1, with a dashed circle surrounding a hinge portion.
FIG. 12B is an exploded view of the Glasses of FIG. 12A, showing the hinge portion within the dashed circle of FIG. 12A surrounding a hinge portion.

### DETAILED DESCRIPTION OF THE INVENTION

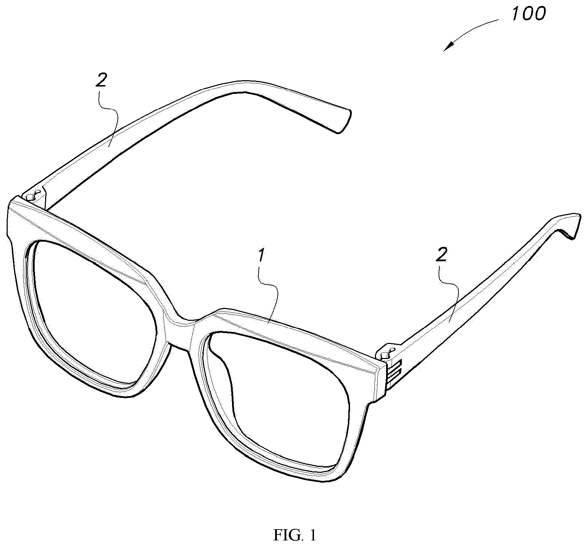

FIG. 1 is a front left perspective view from above of a Mechanical Elastic Structure Glasses 100. The glasses 100 include a frame 1 and a temple 2.

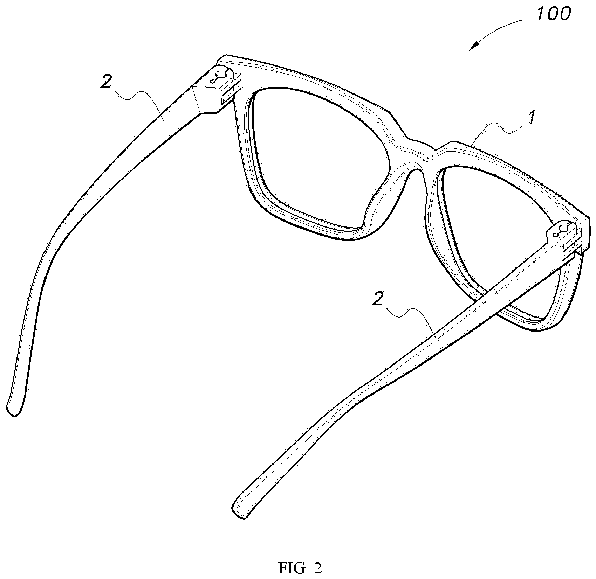

FIG. 2 is a rear right perspective view from above of the Mechanical Elastic Structure Glasses 100 of FIG. 1.

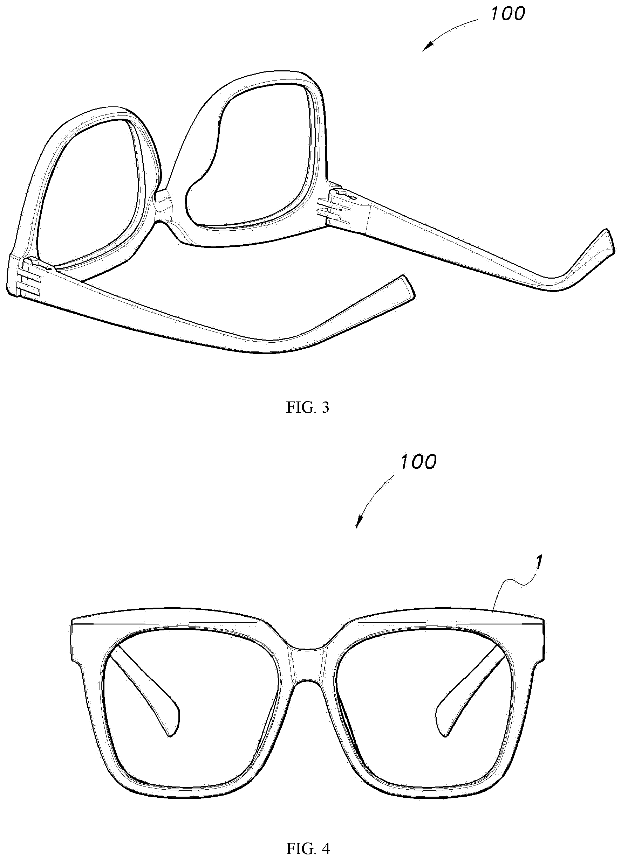

FIG. 3 is a rear right perspective view from below of the Mechanical Elastic Structure Glasses 100 of FIG. 1.

FIG. 4 is a front elevational view of the Mechanical Elastic Structure Glasses of FIG. 1.

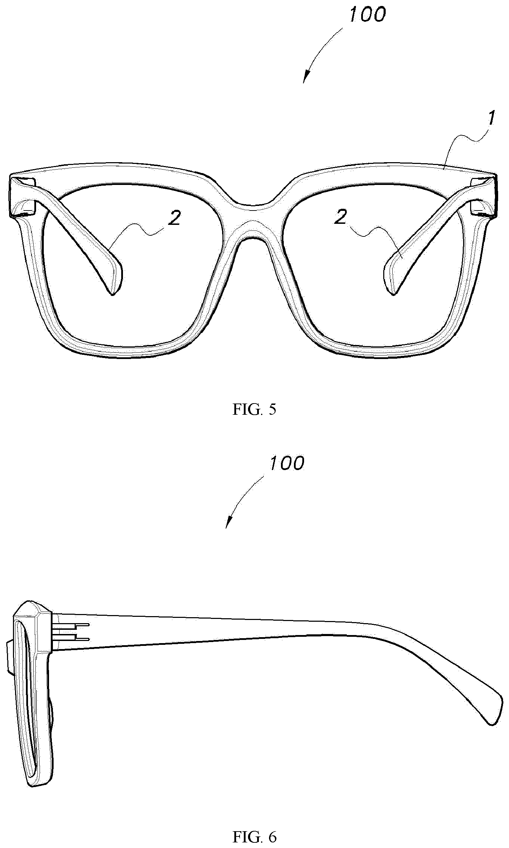

FIG. 5 is a rear elevational view of the Mechanical Elastic Structure Glasses 100 of FIG. 1.

FIG. 6 is a left elevational view of the Mechanical Elastic Structure Glasses 100 of FIG. 1, the right view being a mirror image of this view.

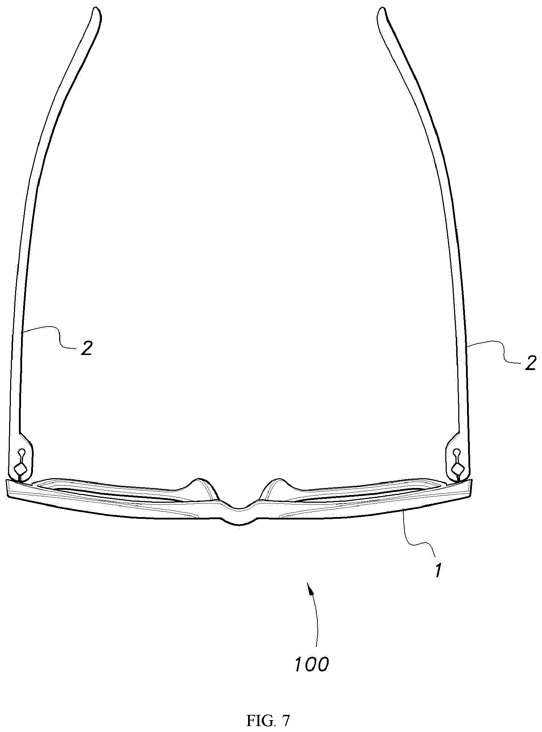

FIG. 7 is a top plan view of the Mechanical Elastic Structure Glasses 100 of FIG. 1.

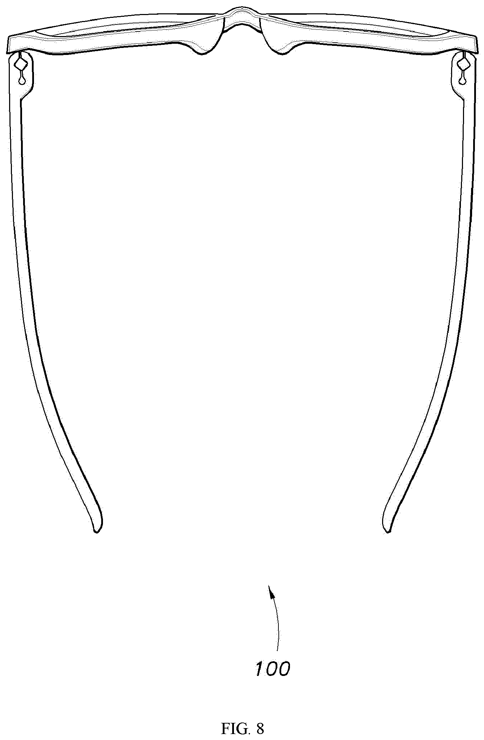

FIG. 8 is a bottom elevational view of the Mechanical Elastic Structure Glasses 100 of FIG. 1.

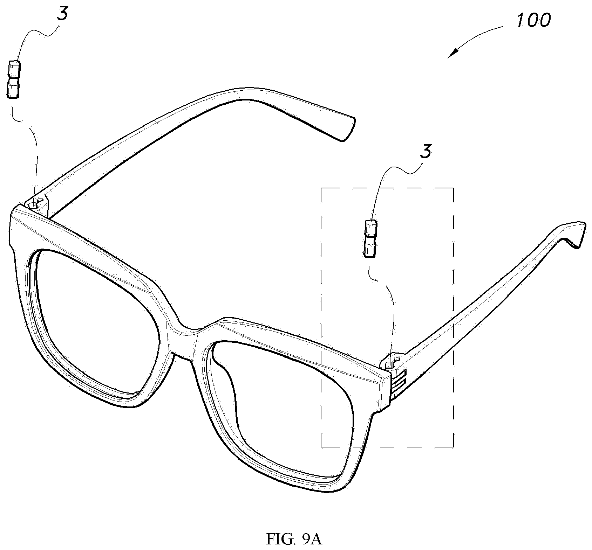

FIG. 9A is a front left perspective view of the glasses 100 from above. This is an assembly view shows a pin 3 forming part of a left hinge, in a region within a dashed outline; the right hinge being a mirror image thereof. The terms left and right are from the viewpoint of a wearer of the glasses 100.

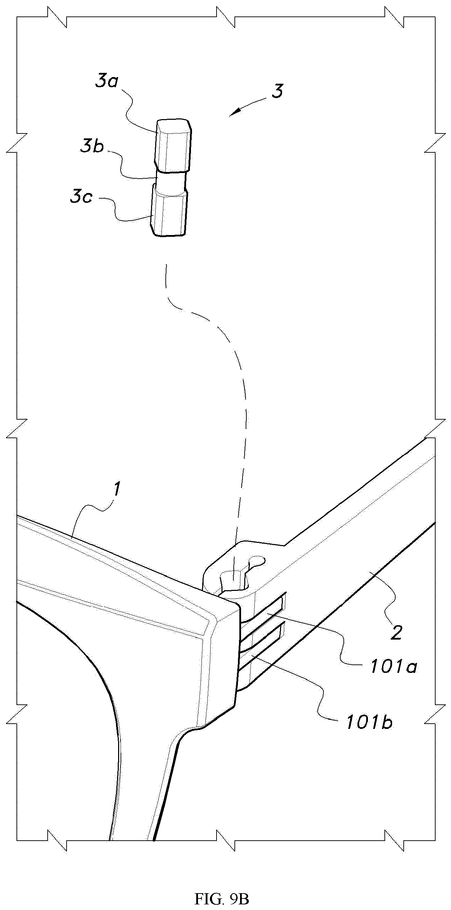

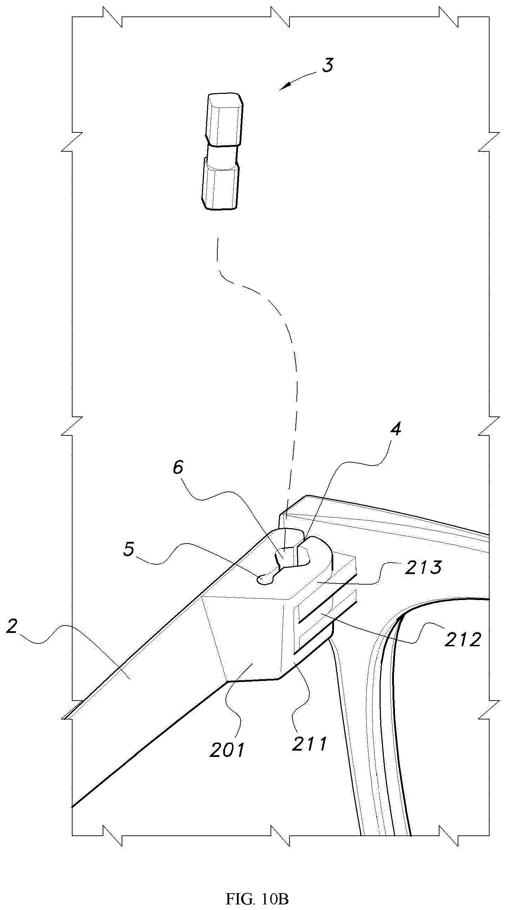

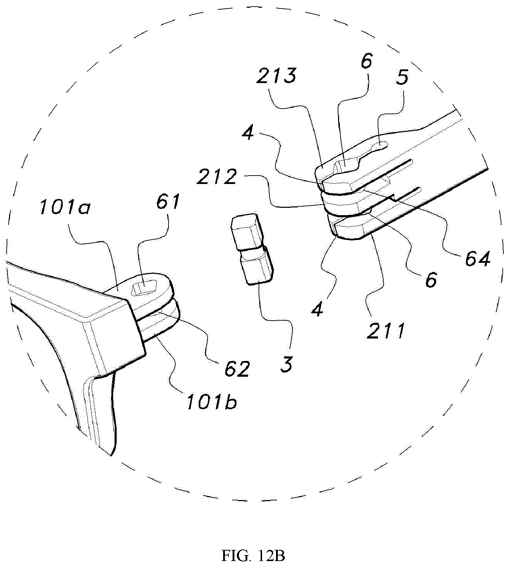

FIG. 9B is an enlarged view of the portion shown in dashed outline in FIG. 9A. A hinge structure is shown between the temple 2 and the frame 1. The frame 1 includes a pair of teeth 101a and 101b extending outward from the frame 1, and engaging with teeth of the temple 2 (shown in greater detail in FIG. 10B and FIG. 12B. The upper tooth 101a has a circular opening therethrough to receive the pin 3, and the lower tooth 101b likewise has a circular opening therethrough to receive the pin 3. The pin 3 thereby secures the hinge joint.

The pin 3 has an upper portion 3a having a cross section in the form of a square chamfered shape, a cylindrical central portion 3b having a circular cross section, and a lower portion 3c having a cross section in the form of a square chamfered shape.

The pin 3 is composed of a resiliently deformable material such as a resiliently deformable plastic material. Any plastic materials can be used which would be known to any one having skill in the hinge arts or plastic material arts. Materials can also include those formed from resiliently deformable rubber as well as from silicone, in addition to plastic.

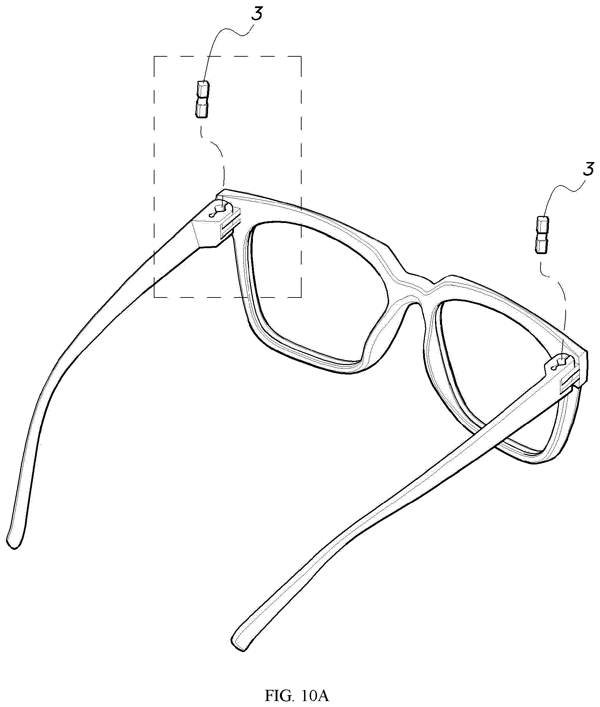

FIG. 10A is a rear right perspective view from above of the assembly of the pin 3 forming part of the left hinge together with a temple portion in a region within a dashed outline.

FIG. 10B is an enlarged view of the portion shown in dashed outline in FIG. 10A, and shows the temple portion which receives the pin 3 and engages with a glasses portion which likewise receives the pin 3.

The hinge portion of FIG. 10B includes the pair of teeth 101a and 101b of FIG. 9B (and also shown in FIG. 12B) which extend from the frame 1; the pin 3; and three teeth 211, 212, and 213 of the temple 2. The tooth 213 is an upper tooth, the tooth 212 is a middle tooth, and the tooth 211 is a lower tooth. These three teeth 211, 212, and 213 engage with the teeth 101a and 101b as shown in FIG. 9B and FIG. 12B.

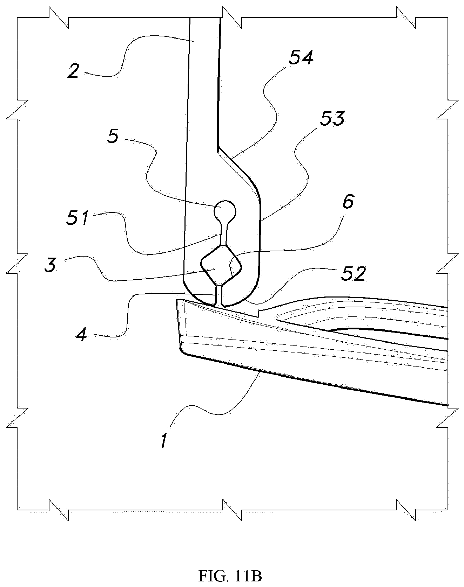

As shown in FIG. 10B, the hinge portion of the temple 2 includes a widened portion 201. The widened portion is shown in greater detail in FIG. 11B, and having a first side 53, a second side 53, and an end portion 52. The end portion 52 has a gap 4, as shown in FIG. 10B and in FIG. 11B.

There is an opening 6 in the upper tooth 213, and there is the gap 4 at the end of the temple 2 which is in communication with the hole 6. There is a hole 5 and a channel 51 (shown in FIG. 11B). The channel 51 is in communication with both the hole 5 and the hole 6.

The tooth 211 has a square chamfered hole receiving the pin 3; the tooth 212 has a circular opening receiving the pin 3; and the tooth 213 has a square chamfered hole receiving the pin 3 (shown in FIG. 12B). The teeth 211, 212, and 213 of the temple 2, together with the teeth 101a and 101b of the frame, and together with the pin 3, form a hinge assembly.

There is no gap in the tooth 212, so that once the pin 4 has been inserted into the hinge assembly, the temple 2 cannot be removed from the frame 3, and can only rotate about the pin 3 as explained further below.

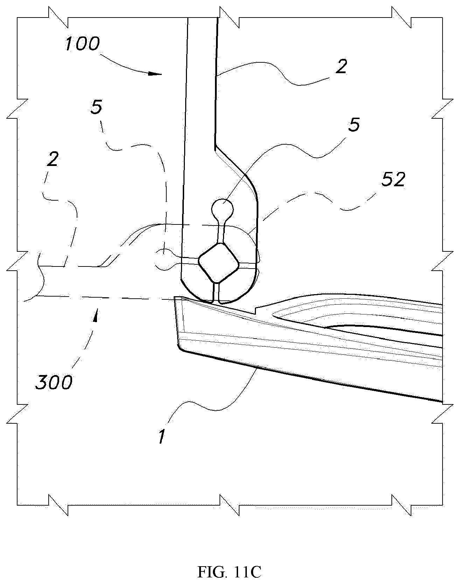

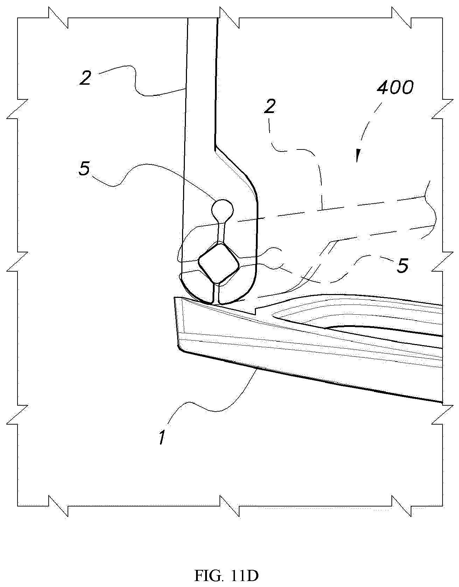

The gap 4 in the tooth 213, together with the hole 5 and the channel 51, enables resilient flexing of the tooth 213 so as to enable rotational movement of the temple 2 relative to the frame 1. The pin 3 is held against rotation by the teeth 101a and 101b of the frame 1, so that a torque applied by manual engagement of the temple 2 can cause rotational movement of the temple 2 about the pin 3, because the force applied by the user to the temple 2 is sufficient to resiliently deform the tooth 212 so that the gap opens slightly and the opening 6 expands slightly so that the temple 2 can rotate about the pin 3. The movement is shown in FIG. 11C and in FIG. 11D.

The above discussion of the tooth 213 likewise applies to the tooth 211, the tooth 211 being essentially identical to the tooth 213, and allows rotation of the temple 2 as described above.

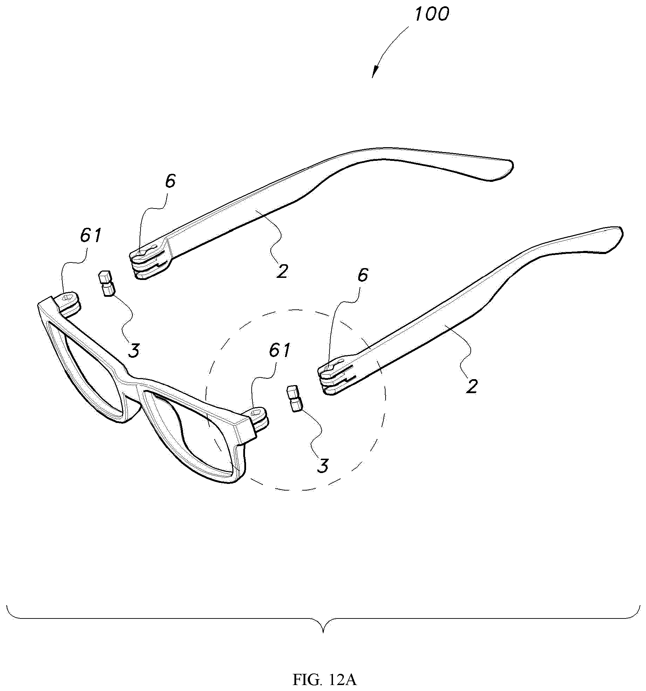

As described above, and as shown in FIG. 12A and FIG. 12B, the tooth 212 has a circular opening but no gap, and therefore cannot expand to release the pin 3. Therefore, the tooth 212 secures the temple 2 to the frame 1, even when force is applied to the temple 2 to rotatably move it relative to the frame 1.

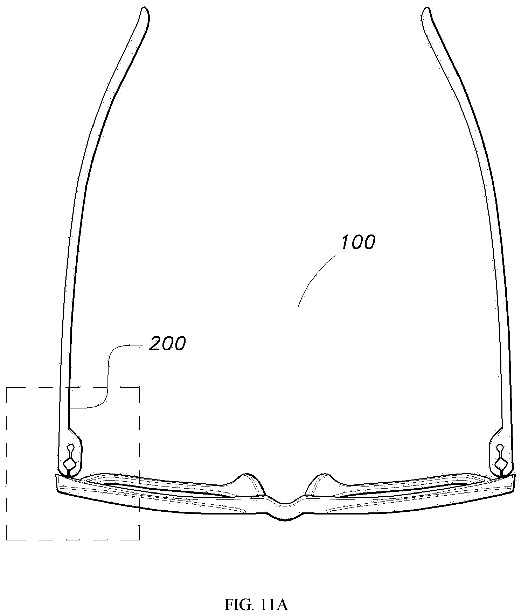

FIG. 11A is a top plan view of the Mechanical Elastic Structure Glasses 100 of FIG. 7, having a region 200 shown in dashed outline.

FIG. 11B is an enlarged view of the portion 200 shown in dashed outline in FIG. 11A. This view shows the top view of the hole 6, the pin 3, the gap 4, the hole 5, the channel 51, and the side 54, the side 53, and the end portion 52 having the gap 4. The end portion 52 is rounded, so as to permit rotation of the temple 2 about the pin 3, relative to the frame 1.

FIG. 11C is an enlarged view of the portion 200 shown in dashed outline in FIG. 11A, showing a second position 300 of a temple 2 in dashed outline. The second position 300 of the temple 2 is reached through an outward movement of the temple 2 pivoting about the pin 3. The hole 5 is also indicated in dashed outline in this view. The end portion 52 is also shown in dashed outline in the second position 300. In the second position 300, the pin 3 remains in its original position.

FIG. 11D is an enlarged view of the portion 200 shown in dashed outline in FIG. 11A, showing a third position 400 of the temple 2 in dashed outline. In this view, the third 400 of the temple 2 is reached through an inward movement of the temple 2 pivoting about the pin 3. The hole 5 is also indicated in dashed outline in this view. The end portion 52 is also shown in dashed outline in the second position 300. In the third position 400, the pin 3 remains in its original position. Due to the square shape of the pin 3, the temple naturally is biased to one of the positions shown, i.e. namely (a) the original position shown in solid lines in FIG. 11D, the second position 300 of FIG. 11C, or the third position 400 of FIG. 11D.

The original position of the temple 2 is shown in solid lines in FIG. 11D, and is considered the first position of the temple 2. In all, the temple 2 can range in motion by 180 degrees, in 90 degree increments.

FIG. 12A is an exploded view of the Glasses of FIG. 1, with a dashed circle surrounding a hinge portion. In this view, respective holes 61 are shown in the teeth 101a on opposed sides of the frame 1, the teeth 101a being shown in detail in FIG. 9B and in FIG. 12B. The holes 6 are respectively shown in the teeth 213 (shown in detail in FIG. 10B and FIG. 12B).

FIG. 12B is an exploded view of the Glasses of FIG. 12A, showing the hinge portion within the dashed circle of FIG. 12A. The teeth 101a and 101b of the frame 1 are shown having respective holes 61and 62. The holes 61 and 62 are square and have no gap or other openings, so that they hold the pin 3 without permitting rotation of the pin 3 relative to the frame 1.

FIG. 12B shows the teeth 211, 212, and 213 of the temple 2. The holes 6 are in the teeth 211 and 213, and are respectively shaped as chamfered squares with respective gaps 4 (one gap 4 is shown in detail in FIG. 11B). A round hole 64 is shown in FIG. 12B, having no gap or other opening, and is described above. The round hole 64 retains the pin 3 so that the temple 2 is secured for pivotable movement relative to the frame 1.

According to the claimed subject-matter, the teeth 211, 212, and 213 receive the teeth 101a and 101b in snug engagement so that there the temple 2 can rotate only in a single plane of motion. The fit is tight enough to prevent motion of the temple 2 relative to the frame 1, at all times other than when force is being applied to move the temple 2 to the second position or the third position described hereinabove.

When a torque is applied to the temple 2, the rotation of the hole 6 about the pin 3 results in a force urging the gap 4 to open, and this is possible due to the presence of the hole 5 and channel 51, allowing the hole 6 to be deformed slightly to accommodate rotation of the pin 3 therein.

The following technical points are significant to the present invention are:
a square chamfered fixed rotating shaft design (the pin 3 and the hole 6);
a special-shaped design of three teeth (211, 212, and 213) at the front end of the temple, wherein the front end of the middle tooth 212 of the three teeth of the temple 2 is closed without a gap or opening at the end thereof (such that the hole 64 cannot expand and thereby retains the pin 3 securely), and wherein the front end of the upper and lower teeth of the three teeth of the temple have gaps 4 which are openings; and
there are elastic structure designs at the rear end of the openings of the upper and lower teeth of the three teeth of the temple (namely the respective holes 5 and respective channels 51).

In order to realize the above objectives, the technical scheme adopted by the invention is a device without metal spring and without metal screw, which is formed by injection molding of plastic material and designed by structure, so as to realize the equivalent performance of a glasses hinge with a metal spring device. It is composed of two teeth on the frame, three teeth at the front end of the temple, and a square chamfered fixed rotating shaft through the respective teeth.

In the foregoing, all indicated orientations or positional relationships are only intended to facilitate the description and simplification of the invention, and are not intended to indicate or imply that the device or element referred to must have a specific orientation, be constructed, and operate in a specific orientation, and therefore cannot be understood as a limitation of the invention. In addition, the terms "first", "second", "third", and the like are only used to distinguish descriptions and cannot be understood as indicative or indicative of relative importance.

Further, the double teeth 101 of the frame 1 fit with the front three teeth 201 of the temple 2. The double teeth 101 of the frame 1 are provided with fixing holes in the vertical direction that coincide with the fixed rotating shaft 3, and the fixing holes are used to connect a portion of both ends of the fixed rotating shaft 3.

The three teeth 201 at the front end of the temple 2 fit into the double teeth 101 of the frame 1. The three teeth 201 at the front end of the temple 2 are provided with a rotation hole 6 in a vertical direction that coincides with the fixed rotating shaft 3. The rotation hole 6 is used to connect the other part of both ends of the fixed rotating shaft 3.

Further, the two ends of the fixed rotating shaft 3 are arranged in a square shape, and the four corners thereof are provided with chamfers to ensure that the corresponding positions of the fixed rotating shaft 3 and the double teeth 101 of the frame 1 are precisely matched and not loose. The middle section of the fixed rotating shaft 3 is arranged in a cylindrical shape.

The middle teeth of the three teeth 201 on the front end of the temple 2 are provided with grooves in a cylindrical shape corresponding to the middle section of the fixed rotating shaft 3 to ensure that the temple 2 is smooth and does not get stuck during rotation. At the same time, the cylindrical shaped grooves can facilitate the clamping of the fixed rotating shaft 3.

Further, one end of the upper and lower tooth rotation holes 6 of the front three teeth 201 of the temple 2 is provided with an opening 4, and the other end of the rotation hole 6 is provided with an elastic structure hole 5. The upper and lower tooth openings 4 at the front end of the temple 2 rotation hole 6 and the elastic structure holes 5 at the rear end of the temple 2 rotation hole 6 are both used to achieve the elastic function of the temple 2 during the opening and closing process; the front end of the three teeth 201 on the front end of the temple 2 is not open, and the entire circle surrounds the fixed rotating shaft 3 to ensure stable connection between the fixed frame 1 and the temple 2 under the fixed action of the fixed rotating shaft 3.

The working principle and specific use process of the mechanical elastic structure glasses without metal spring movement and metal screws: During the rotation process of the temple 2, the difference between the diagonal distance of the square fixed rotating shaft 3 and the square distance of the square fixed rotating shaft 3, as well as the material elasticity of the plastic temple 2, are utilized to achieve the elastic function of the temple 2 during the opening and closing process.

Based on the above principles, the glasses can be opened in the following two ways:
First, the temple can be fully opened to 180 °, requiring external force to close it;
Secondly, the temple can be opened 90 + 45 ° to naturally return to the vertical position with the frame.

In another embodiment, the pin 3 can be formed in two parts, so that one of the ends can be removed for ease of insertion into one side of the hole 6, and then reassembled by introduction of the removed end into an opposite side of the hole 6.

The invention being thus described, it will be evident that the same may be varied in many ways by a routineer within the scope of the claims.

## Claims

1. Mechanical elastic structure glasses without metal spring cores and without metal screws, comprising:
a frame (1),
a temple (2), and
a fixed rotating shaft (3) for connecting said frame (1) to said temple (2);
said frame (1) having a first tooth (101a) and a second tooth (101b), said first tooth (101a) having a hole for receiving said fixed rotating shaft (3); said second tooth (101b) of said frame (1) having a hole for receiving said fixed rotating shaft (3); and
said temple (2) having three teeth (201) which are adapted to receive said first tooth (101a) of said frame (1) and said second tooth (101b) of said frame (1),
wherein two teeth (101) of said frame (1) have respective fixed holes aligned in a vertical direction consistent with that of said fixed rotating shaft (3),
wherein said three teeth (201) of said temple (2) are disposed at a front end of said temple (2) and are provided with respective rotation holes (6) in a vertical direction consistent with that of said fixed rotating shaft (3),
**characterized in that**, the upper and lower teeth of the three teeth (201) of the temple (2) have openings (4) at the front end of the rotation holes (6), and there are elastic structural holes (5) at the rear end of the rotation holes (6),
wherein the two ends of the fixed rotating shaft (3) are square, and the four corners are provided with chamfers; and where a middle section of said fixed rotating shaft (3) is set as a cylinder,
wherein the middle tooth of said front three teeth (201) of said temple (2) is provided with a bore corresponding to the middle section of the fixed rotating shaft (3), and wherein said bore is cylindrical.
front three teeth (201) of said temple (2) is provided with a bore corresponding to the middle section of the fixed rotating shaft (3), and wherein said bore is cylindrical.

## Patentansprüche

1. Mechanische elastische Strukturgläser ohne Metallfederkerne und ohne Metallschrauben, umfassend:
einen Rahmen (1),
ein Tempel (2) und
eine feste Drehwelle (3) zum Verbinden des Rahmens (1) mit dem Tempel (2);
wobei der Rahmen (1) einen ersten Zahn (101a) und einen zweiten Zahn (101b) aufweist, wobei der erste Zahn (101a) ein Loch zur Aufnahme der festen Drehwelle (3) aufweist; der zweite Zahn (101b) des Rahmen (1) mit einem Loch zur Aufnahme der festen Drehwelle (3); und
wobei der Tempel (2) mit drei Zähnen (201), die zur Aufnahme des ersten Zahns (101a) des Rahmen (1) und des zweiten Zahns (101b) des Rahmen (1) ausgebildet sind,
wobei zwei Zähne (101) des Rahmen (1) jeweils feststehende Löcher aufweisen, die in einer vertikalen Richtung ausgerichtet sind, die der festen Drehwelle (3) entspricht,
wobei die drei Zähne (201) des Tempels (2) an einem vorderen Ende des Tempels (2) angeordnet sind und mit jeweiligen Drehlöchern (6) in einer vertikalen Richtung versehen sind, die der der festen Drehwelle (3) entspricht,
**dadurch gekennzeichnet, dass** die oberen und unteren Zähne der drei Zähne (201) des Tempels (2) am vorderen Ende der Drehlöcher (6) Öffnungen (4) aufweisen und am hinteren Ende der Drehlöcher (6) elastische Strukturlöcher (5) aufweisen,
wobei die beiden Enden der festen Drehwelle (3) quadratisch sind und die vier Ecken mit Fasen versehen sind; und wobei ein mittlerer Abschnitt der feststehenden Drehwelle (3) als Zylinder eingestellt ist,
wobei der mittlere Zahn der drei vorderen Zähne (201) des Tempels (2) mit einer Bohrung versehen ist, die dem mittleren Abschnitt der festen Drehwelle (3) entspricht, und wobei die Bohrung zylindrisch ist.

## Revendications

1. Verres de structure élastique mécanique sans noyaux de ressorts métalliques et sans vis métalliques, comprenant :
un cadre (1),
un temple (2), et
un arbre rotatif fixe (3) pour relier le cadre (1) au temple (2) ;
le cadre (1) comportant une première dent (101a) et une deuxième dent (101b), la première dent (101a) comportant un trou pour recevoir l'arbre rotatif fixe (3) ; la deuxième dent (101b) du cadre (1) comportant un trou pour recevoir l'arbre rotatif fixe (3) ; et
le temple (2) comportant trois dents (201) aptes à recevoir la première dent (101a) du cadre (1) et la deuxième dent (101b) du cadre (1),
las deux dents (101) du cadre (1) présentent des trous fixes respectifs alignés dans une direction verticale cohérente avec celle de l'arbre rotatif fixe (3),
les trois dents (201) du temple (2) sont disposées à une extrémité avant du temple (2) et sont pourvues de trous de rotation (6) respectifs dans une direction verticale cohérente avec celle du arbre rotatif fixe (3),
**caractérisé en ce que** les dents supérieures et inférieures des trois dents (201) du temple (2) présentent des ouvertures (4) à l'extrémité avant des trous de rotation (6), et il y a des trous structurels élastiques (5) à l'extrémité arrière des trous de rotation (6),
les deux extrémités de l'arbre rotatif fixe (3) sont carrées et que les quatre coins sont pourvus de chanfreins ; et où une section médiane de l'arbre rotatif fixe (3) est réglée en cylindre,
la dent moyenne des trois dents avant (201) du temple (2) est munie d'un alésage correspondent à la section moyenne de l'arbre rotatif fixe (3), et l'alésage est cylindrique.
